(19) Europäisches Patentamt
European Patent Office
Office européen des brevets

(11) **EP 4 730 777 A1**

(12) **EUROPEAN PATENT APPLICATION**

(43) Date of publication:
**22.04.2026 Bulletin 2026/17**

(51) International Patent Classification (IPC):
*H04N 19/11* (2014.01)  *H04N 19/176* (2014.01)
*H04N 19/46* (2014.01)  *H04N 19/593* (2014.01)
*H04N 19/117* (2014.01)

(21) Application number: **24315474.7**

(22) Date of filing: **15.10.2024**

(52) Cooperative Patent Classification (CPC):
**H04N 19/117; H04N 19/11; H04N 19/176;**
**H04N 19/46; H04N 19/593**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Beijing Xiaomi Mobile Software Co.,**
**Ltd.**
**Beijing Beijing 100085 (CN)**

(72) Inventors:
 • **Abdoli, Mohsen**
 **Beijing, 100085 (CN)**

 • **Tissier, Alexandre**
 **Beijing, 100085 (CN)**
 • **Plowmam, Frank**
 **Beijing, 100085 (CN)**
 • **Ghaznavi Youvalari, Ramin**
 **Beijing, 100085 (CN)**

(74) Representative: **Schenk, Markus et al**
 **Schoppe, Zimmermann, Stöckeler**
 **Zinkler, Schenk & Partner mbB**
 **Patentanwälte**
 **Radlkoferstrasse 2**
 **81373 München (DE)**

(54) **METHOD AND APPARATUS USING ANGULAR INTRA PREDICTION-**

(57) Provided is a method for decoding a picture from a data stream, the method comprising: predicting a first pixel within a coding unit, CU, of the picture from a first line of reference pixels extending alongside a first side of the CU by interpolating the first line of reference pixels at a first position onto which the first pixel is projected along an angular direction of an angular intra prediction mode (IPM) of the CU, and predicting a second pixel within the CU from a second line of reference pixels extending alongside a second side of the CU which is perpendicular to the second line by interpolating the second line of reference pixels at a second position onto which the second pixel is projected along the angular direction of the angular IPM.

Figure 15

## Description

## Technical Field

The present application relates to angular intra prediction such as in block-based picture or block-based video coding.

## Background

There exists a set of 67 Intra Prediction Modes (IPMs) in both VVC and ECM, including two non-angular modes of DC and Planar (index 0 and 1), along with 65 angular modes (indexed as 2,3,...,66). The initial set of 65 angular IPMs could be extended to so-called wide-angle modes, condition to block characteristics such as width/-height ratio (indexed by - 14,-13,...,-1 and 67,68,:..,80).

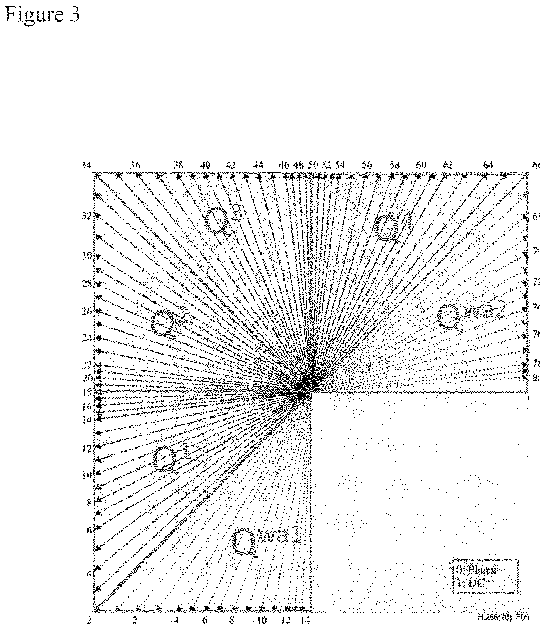

As show in Fig. 3, non-wide-angle IPMs, cover an angle range of between 45 degrees and 225 degrees, while wide-angle IPMs extend their extremes by 45 degrees from each side. Furthermore, one can divide the set of IPMs into four non-wide-angle quarters $Q^1$, $Q^2$, $Q^3$ and $Q^4$, as well as two wide-angle quarters $Q^{wa1}$ and $Q^{wa2}$.

The present application only relates to IPMs in $Q^2$ and $Q^3$. Therefore, the rest of the description of the prior art is focused only on the IPM in these two quarters (i.e. *IPM* $\in$ [18,50]).

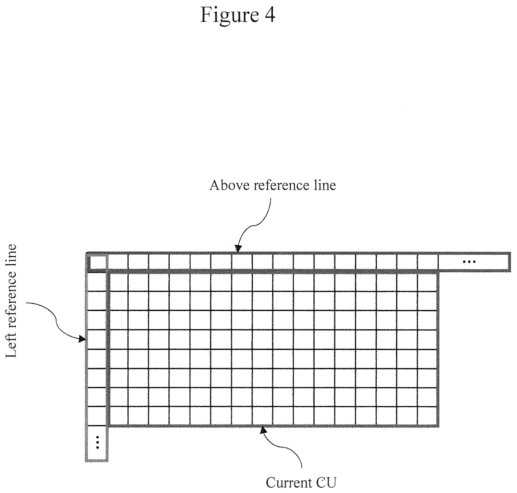

The first step to block prediction is preparing the reference lines. There are typically two reference lines available for each block, namely the reference line at "above" and the reference line at "left", as shown in Fig. 4.

To prepare the prediction process, these two reference lines are labelled as MainRef and SideRef, depending on the angle of IPM. In particular:

$$MainRef = \begin{cases} Left, & IPM \in Q^2 \\ Above, & IPM \in Q^3 \end{cases}$$

and:

$$SideRef = \begin{cases} Above, & IPM \in Q^2 \\ Left, & IPM \in Q^3 \end{cases}$$

Note that the dotted positions shown at the end of each reference line in Fig. 4 are not used for IPMs in $Q^2$ and $Q^3$. Therefore, for the sake of simplicity, we ignore them in the rest of the figures in this description.

For the sake of simplicity, in the examples and figures of rest of this description, we consider examples only in $Q^3$, where the MainRef=Above and SideRef=Left. However, all descriptions can be applied to modes in $Q^2$ by exchanging MainRef and SideRef.

Moreover, in ECM, there are tools such as Multiple Reference Line (MRL), Template-based MRL (TMRL) and Intra-Fusion that offer to the use of reference lines further from the immediate lines at left and above (e.g. reference lines with distance of 3, 5, ..., 12 lines from current CU). The algorithms provided in the prior art and the description of this disclosure only focus on the immediate reference lines. However, without loss of generality, all described algorithms can be adapted to be used with MRL, TMRL and Intra-Fusion or any other tools that uses different reference lines.

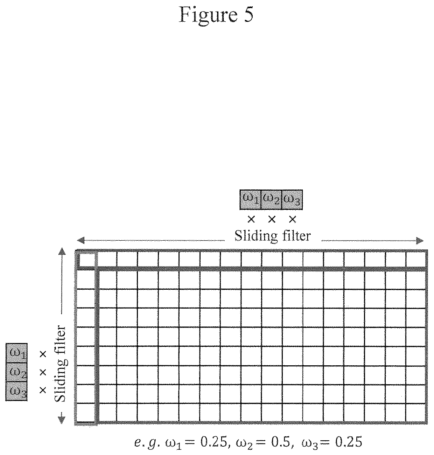

Reference filtering is an important pre-process that is conditionally applied to both MainRef and SideRef. The goal of this step is to denoise reference pixels prior to the intra prediction process in order to avoid projection of noise (e.g. grainy pixels) within the current CU. The process of smooth filtering of reference lines typically consists of sliding a multi-tap filter on the reference lines, as depicted in Fig. 5.

The use of reference line filtering is highly optimized based on CU characteristics such as width/height as well as the angular IPM that is going to be applied. Even though reference line smoothing has proved efficient in different compression scenarios (e.g. low bitrate), it is important to note that excessive filtering of reference pixels or filtering in absence of noise results in texture information loss on the reference lines. This typically leads into degradation of compression efficiency due to inaccurate angular prediction.

A problem results for angular IPMs where the MainRef would be interpolated at a portion beyond the SideRef, i.e. on the side leading away from the CU, a so called extension of the MainRef. Usually, such extension is derived by projection and interpolation opposite to the angular IPM from the SideRef, but such process may degrade the intra predictor thus obtained for the angular IPM by an unintentional reference filtering, thereby resulting into texture information loss and a less efficient angular intra prediction coding.

## Summary

Thus, it is an object of the present application to provide a concept for angular intra prediction which is more effective.

This object is achieved by the subject matter of the claims.

It is a finding of the inventors that angular intra prediction for angular IPMs whose angular direction projects at least one pixel in the CU onto one line of reference samples while projecting another pixel in the CU onto another line of reference sample may be made more efficient in terms of coding efficiency when predicting the former based on the one line of references samples and predicting the latter based on the other line of references samples. By this measure, it is possible to avoid unequal and/or excessive smoothing since the prediction does not require any detour in extending the one line of reference samples based on the other.

According to an embodiment, the angular direction points steeper onto the first line than onto the second line so that the first line might be called the main line while the second line of reference samples may be called the side line, and the decision as to which pixel is predicted using the side line, and which using the main line, is made based on a classification of the pixels into first-type pixels and second-type pixels, wherein the first-type pixels are predicted from the main line of reference pixels, while the second-type pixels are predicted from the side line of reference pixels. The classification may be performed so that a filter kernel used for the interpolating the main line of reference pixels, placed whereto the first-type pixels are projected along the angular direction of the angular IPM, would overlap, at least partially (e.g. with at least one filter tap), a portion of the main line filled - e.g. initially with then being smoothened, or just filled - by co-located previously de/encoded pixels; in other words, so that the filter kernel used for the interpolating the main line of reference pixels, placed whereto the first-type pixels are projected along the angular direction of the angular IPM, would have at least one filter tap falling into the portion of the main line of reference pixels within which the main line of reference pixels is filled with co-located already decoded pixels of the picture, and so that the second-type pixels cover a remaining portion of the CU, where no first-type pixel is. In even other words, the classification may be performed so that so that the filter kernel used for the interpolating the main line of reference pixels, placed whereto the second-type pixels are projected along the angular direction of the angular IPM, would remain outside the portion of the main line of reference pixels within which the main line of reference pixels is filled with co-located already decoded pixels of the picture, and so that the first-type pixels cover a remaining portion of the CU, where no second-type pixel is. By this measure, the pixels predicted using the side line and the pixels predicted using the main line would undergo similar degree of smoothing, optionally by way of smoothing the main and side lines with a smoothing filter before the interpolation in additional to a smoothing inherently effectuated by the interpolation, or merely caused by the interpolation.

According to an embodiment, intra-predicted CUs of the picture, which have an angular IPM associated therewith so as to be predicted from two mutually perpendicular lines of reference pixels extending along two mutually perpendicular sides of the intra-predicted CUs, are classified into first-type CUs and second-type CUs, with subjecting the first-type CUs to the above way of prediction using both reference pixel lines and predicting the second-type CUs using the main line of reference pixels only. Inherent and/or explicit signalization may be used for classification.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

Fig. 1 shows a block diagram of a conventional video encoder;
Fig. 2 shows a block diagram of a conventional video decoder;
Fig. 3 shows angular Intra Prediction Modes (IPMs) in VVC and ECM;
Fig. 4 shows reference lines at above and left of current CU;
Fig. 5 shows the application of a sliding smooth filter on reference lines.
Fig. 6 shows on the left-hand side a generic definition of prediction angle w.r.t. to a given set of reference pixels, and on the right-hand side, three particular cases which are discussed based on Fig. 6;
Fig. 7 shows the extension of MainRef from SideRef by applying inverse angle of IPM44 on the SideRef.
Fig. 8 shows an illustration of Extended MainRef, Initial MainRef and Extension of MainRef for current CU;
Fig. 9 shows a multi-tap interpolation for extending MainRef from SideRef;
Fig. 10 shows a multi-tap interpolation for prediction of pixels within current CU from Extended MainRef;
Fig. 11 shows a categorization of pixels within current CU, based on the use of reference line for two IPMs 36 and 48 from $Q^3$;
Fig. 12 shows a diagram of the proposed method for angular prediction from SideRef, without extending MainRef;
Fig. 13 shows the identification of eligible pixels and the application of the inverse angle on them using SideRef;

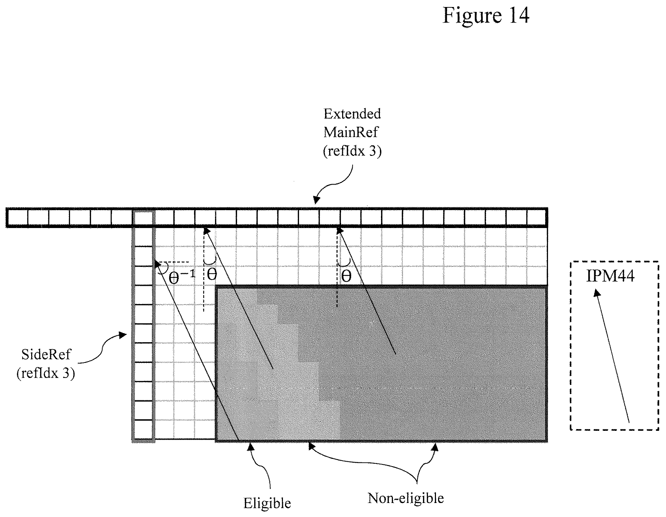

Fig. 14 shows example of applying the proposed method when reference line index (refIdx) is non-zero.

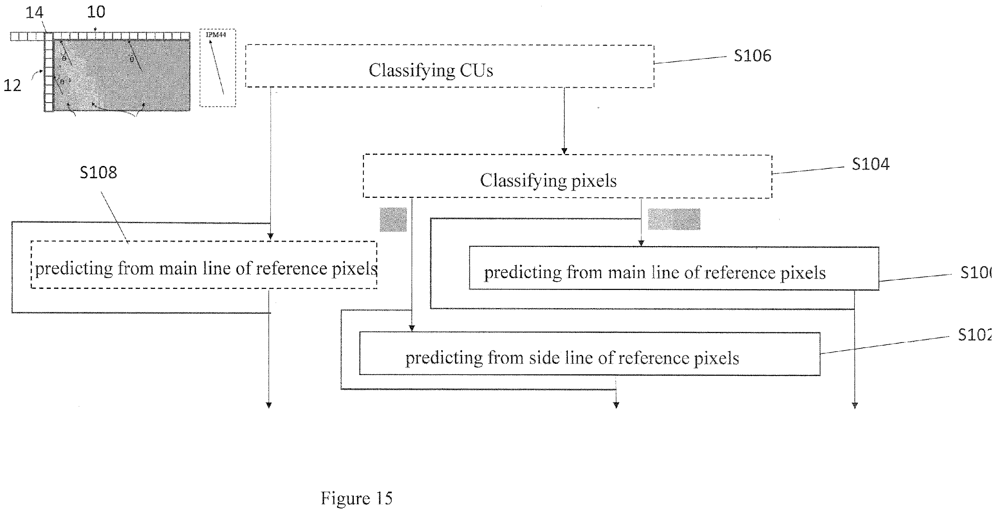

Fig. 15 shows, by way of a schematic and a flow diagram, an example of a method for en/decoding using angular intra prediction.

## Detailed Description of Embodiments

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

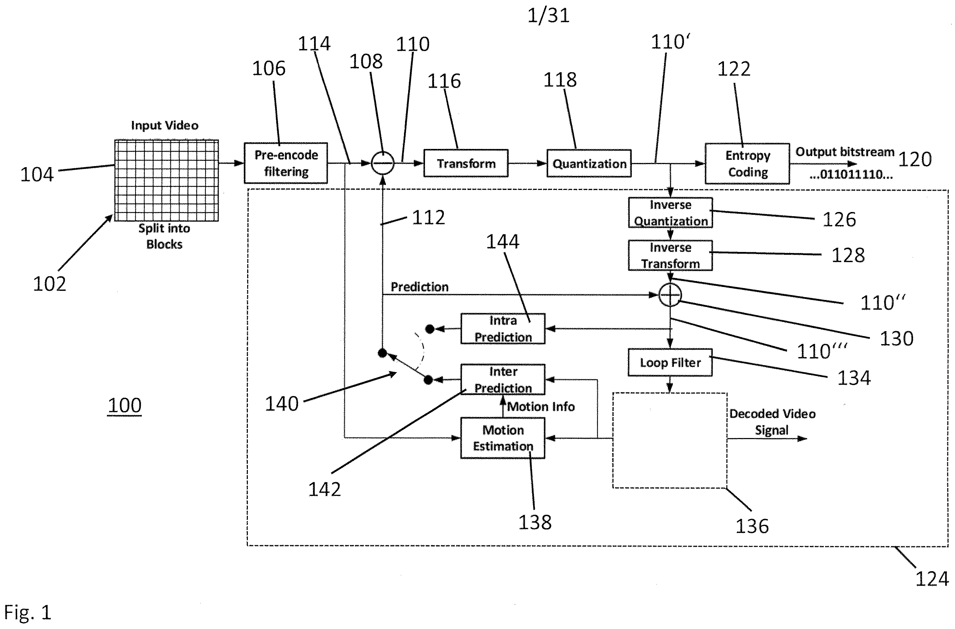

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signalling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

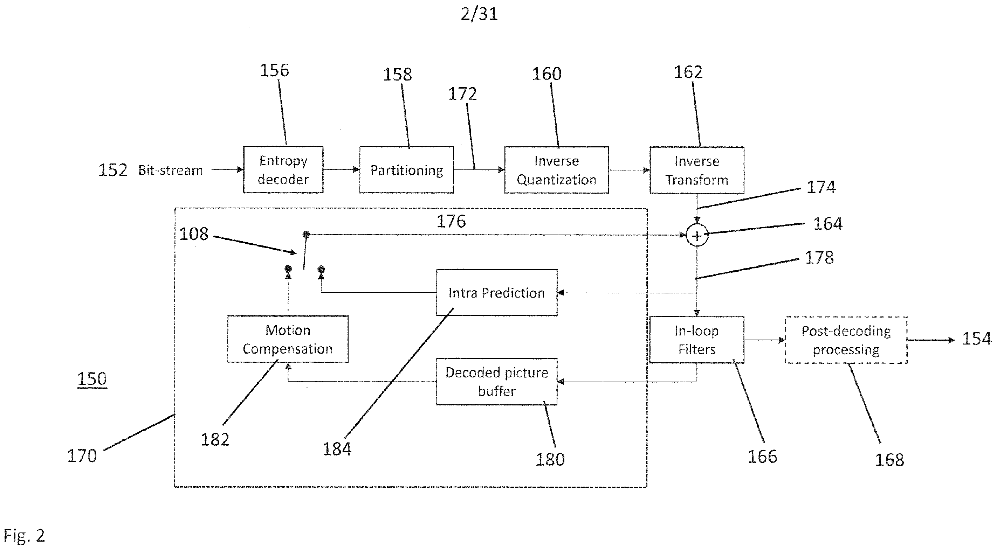

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64×64 or 128×128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 1768 The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

The encoder and decoder designs shown in Fig. 1 and 2 may be used to build the subsequently proposed embodiments thereinto.

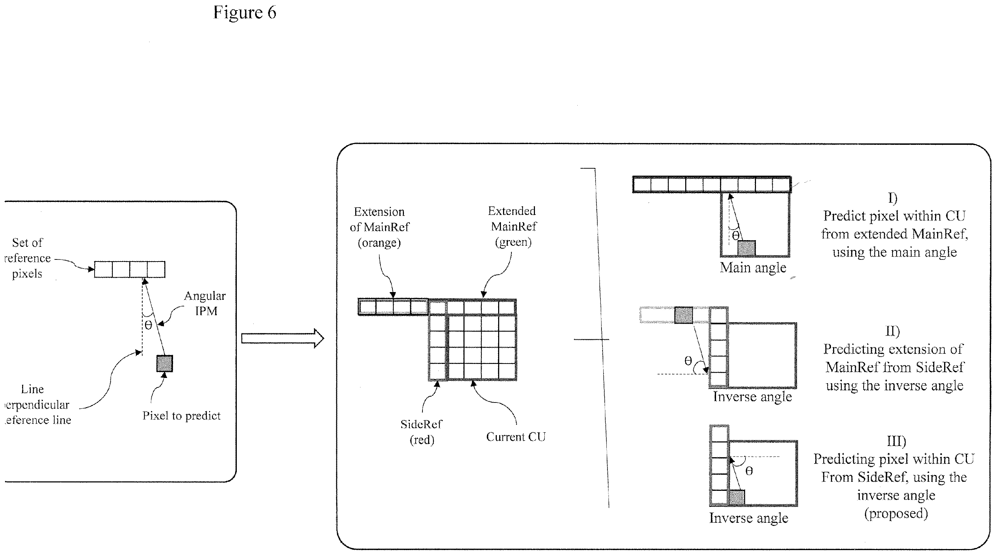

Before describing the detailed embodiments, hereby, a generic definition of prediction angle given a set of reference pixels (i.e. reference line) is provided in Fig. 6 on the left-hand side. As can be seen, an arrow *from* "a pixel to predict" *to* "a set of reference pixels" define a prediction angle. Based on the choices for the "set of reference pixels", there are three possibilities, as shown on the right-hand side at I, II and III in Fig. 6.

Based on the three possible cases in Fig. 6, in the rest of this disclosure, two angles are defined, namely the "main angle" and the "inverse angle". The "main angle" is the angle between the angular IPM and the "extended MainRef, while the "inverse angle" is the angle between the angular IPM and the "SideRef".

Details of MainRef extension from SideRef is described in the following.

Fig. 6 already reveals proposals according to the subsequently explained embodiments, but details are set out below.

Details of MainRef extension from SideRef is described in the next section.

The next step toward the angular CU prediction is extending MainRef from SideRef. In this step, pixels of SideRef are projected into the extended indexes of the MainRef, i.e. the pixels in the extended portion of the MainRef is derived from the pixels of SideRef by projecting SideRef into MainRef along the IPM, in order to make a longer MainRef line that contains both initial reference pixels of MainRef and extended reference pixels of SideRef. This is done by interpolation. That is, to extend MainRef, pixels in the extension region of MainRef are projected into SideRef which is then interpolated thereat to yield the extension region's pixel values. For the interpolation, an interpolation filter kernel is placed onto the SideRef S pixel surround the position onto which the respective pixel of the extension of MainRef is projected and the interpolation result, i.e. the sum of products between the filter kernel's filter taps and the collocated SideRef's pixels is used as the respective pixel's value of the extension of MainRef. Note here that, whenever "projecting A onto/into B along IPM" is mentioned herein, this shall describe "deriving/predicting B from A along IPM". This prediction/projection, involves interpolation by placing a kernel of an interpolation filter onto a position within A onto which position B is projected contrary to IPM. Note further, that while extending MainRef is done along IPM, the actual prediction of pixels inside the CU is done from the reference lines contrary to IPM.

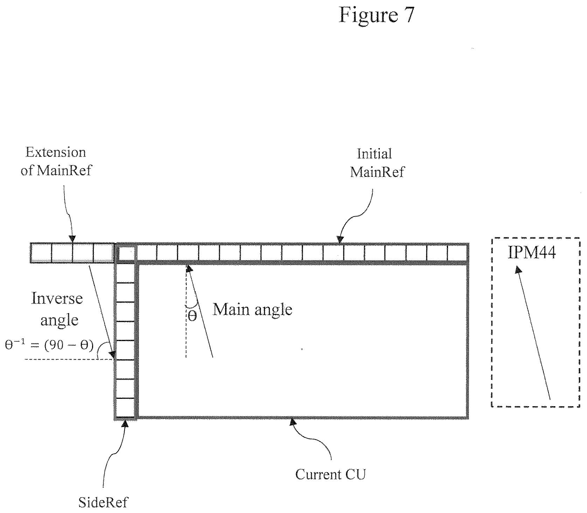

The process of extending MainRef from SideRef corresponds to case II from Fig. 6. An example is provided below in Fig. 7. Let IPM44 be the selected angular IPM for current CU of size $16 \times 8$. As IPM44 falls into $Q^3$, we have *MainRef=Above* and *SideRef=Left.*

As explained in previous section, an angle $\Theta$ which is associated with IPM44 is defined as the angle between IPM44 (see Fig. 3) and a line perpendicular to the MainRef line, and, thus, parallel to SideRef.

To extend MainRef by projection of SideRef, another angle named inverse $\Theta$ (or $\Theta^{-1}$) is computed as the angle between IPM44 and a line perpendicular to SideRef. And since SideRef is itself perpendicular to MainRef, then $\Theta^{-1} = (90 - \Theta)$. Fig. 7 demonstrates the process of computing the inverse angle for extending MainRef from SideRef.

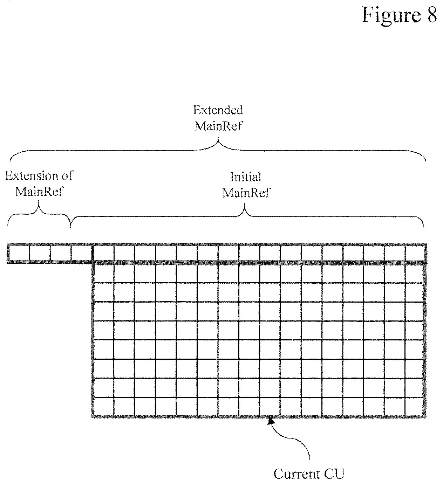

Hereafter, as depicted in Fig. 8, the *Extended MainRef* refers to the extended set of pixels resulting from extending MainRef using SideRef. That is, *Extended MainRef* is in fact the union of the *Initial MainRef* part and the *Extension of MainRef.*

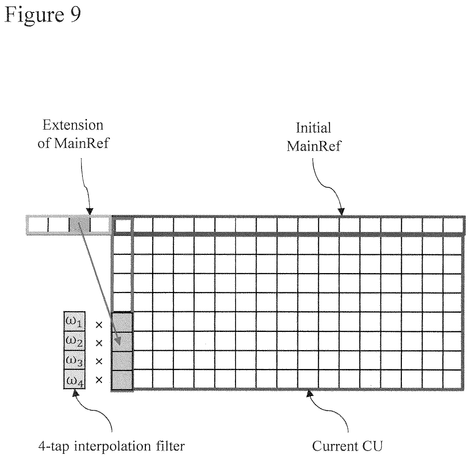

To project SideRef into extension of MainRef based on inverse angle $\Theta^{-1}$, a multi-tap interpolation filter is applied on the SideRef, as shown in Fig. 9. In this figure, the pink pixel on the extension of MainRef is interpolated from the four green pixels on the SideRef, using a 4-tap filter defined by weights.

Once all pixels in the extension of MainRef are projected from SideRef, the pixel prediction within the current CU is carried out by projection of Extended Main-Ref pixels onto the pixel positions within the CU and following the angle of given IPM.

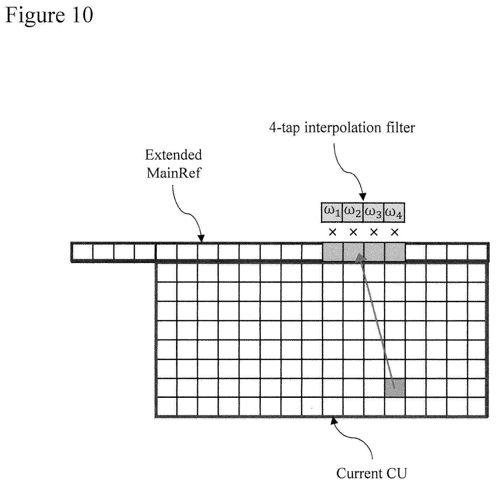

As shown in Fig. 10, this process is similar to the process described with respect to Fig 9., except that the pink pixel (i.e. pixel to be predicted) is within the CU and the sliding interpolation filter (4-tap in this example) filter is applied on the reference pixels on the Extended Main-Ref.

Depending on the prediction angle, size of the block and the size of the interpolation filter for all angular IPMs in $Q^2$ and $Q^3$, the multi-tap interpolation filter might use pixels from extension of MainRef or initial MainRef. In this sense, each pixel within current CU is of one the following three categories:

    A) Using pixels from only extension of MainRef
    B) Using pixels from both initial MainRef and Extension of MainRef
    C) Using pixels from only initial MainRef

Given above description of the prior art, for CUs with an IPM in $Q^2$ or $Q^3$, part of the reference pixels (i.e. Initial MainRef) is filtered once, while the other part (Extension of MainRef) is filtered twice. This is due to the process described in connection with Fig. 7, in which reference pixels on the SideRef go through a multi-tap filter to be projected on the extension part of the MainRef. While, according to the description made with respect to Fig. 5, SideRef could have already been smooth filtered in the pre-process of the intra prediction. Therefore, the extension part of the MainRef is always filtered more strongly than the reference pixels on the Initial MainRef.

As explained earlier, excessive filtering of reference pixels can lead to loss of texture data. Therefore, the prior art methods suffer from potential inaccuracy on the texture information on the extension part of the MainRef.

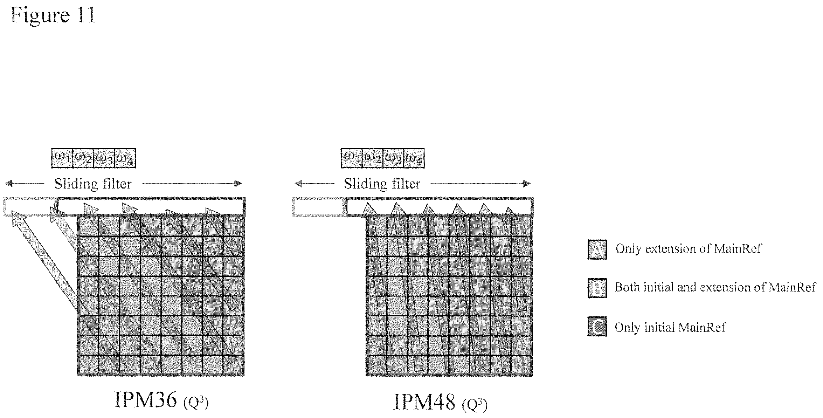

According to the pixel categorisation presented in connection with Fig. 11, the above problem negatively impacts the prediction of pixels of categories A and B, since their angular prediction involves references from the extension of the MainRef.

This application proposes to avoid the aforementioned problem for Category A described in connection with Fig. 11 (i.e. pixels that use only references pixels from the extension of MainRef), by directly projecting an inverse angle on the SideRef. In other words, instead of first projecting SideRef to the extension of MainRef, then second, projecting the extension of MainRef inside the block, the proposed method directly applies an inverse angle projection on the SideRef.

It is important to note that the proposed method does not impact the pixel prediction of Category B described in connection with Fig. 11 (pixels that use both Initial MainRef and extension of MainRef).

The core idea of this application consists of the following elements for angular intra prediction of a CU:

- Eligibility: determine whether the combination of current CU characteristics and the current angular IPM is eligible for the proposed method. In other words, it should be determined if state-of-the-art method requires extension of MainRef from SideRef for prediction of current CU by the *main angle* defined by current IPM. And if that is so, determine whether there is at least one pixel of Category A within the current CU.
- Angle shift: compute an inverse angle that applies the same angular projection as the main angle, but on the SideRef. Since SideRef is perpendicular to MainRef, the angle shift consists of shifting the main angle by 90 degrees.
- SideRef pixel projection by the inverse angle: once above steps are finished, the proposed method is applied on each Category A pixel within the CU, by projecting the appropriate reference pixels from SideRef according to the inverse angle.

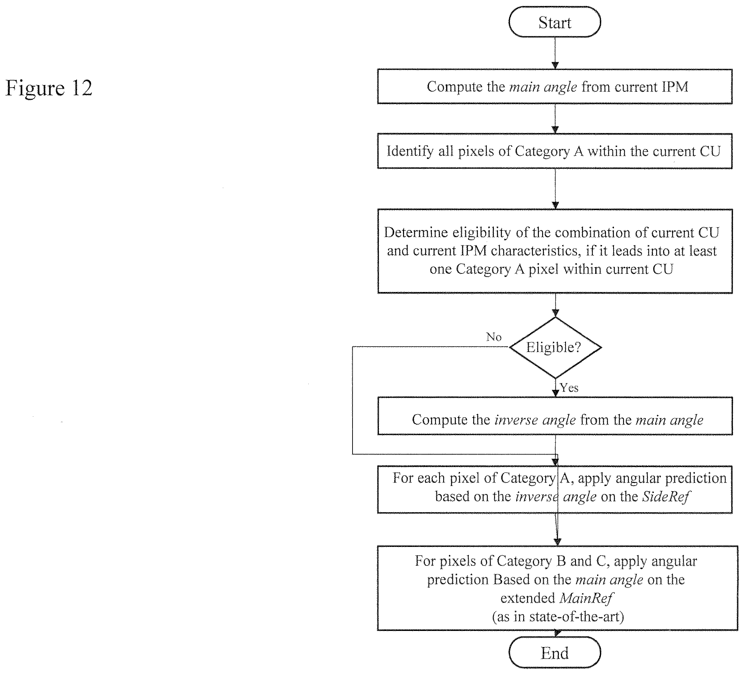

Fig. 12 shows the diagram of the proposed algorithm.

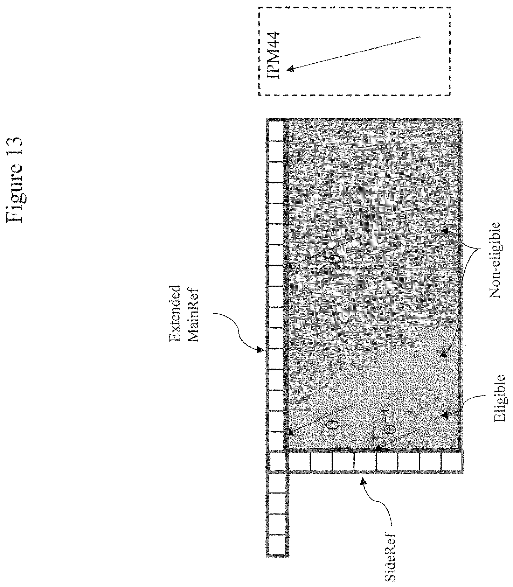

Fig. 13 illustrates an example of using IPM44 for identifying eligible pixels and applying the inverse angle on the SideRef for their prediction. As can be seen in this figure, pixels within current CU are divided into orange (category A), gray (category B) and green (category C). Then since only category A is eligible for projection from the SideRef, its prediction angle is set to the "inverse angle $\Theta^{-1}$", while for the other two non-eligible categories, since the Extended MainRef is used, then the "main angle $\Theta$" is used as prediction angle.

The algorithm described in this disclosure merely focuses on the use of immediate reference at left and above of the current CU. However, intra coding tools such as MRL, TMRL and Intra-Fusion allow the use of further reference lines. Without loss of generality, all descriptions provided here are applicable to those coding tools as well. For instance, Fig. 13 visualizes an example of applying the proposed method with any of abovementioned intra tools, where reference line index (refIdx) is non-zero.

The proposed method can be applied in combination with state-of-the-art method, in which the angular prediction of the Category A pixels is performed from the *Extension of the MainRef.* One way to implement this combinatory method is to, for each Category A pixel, do:

    1) Compute the prediction by the proposed method.
    2) Compute the prediction by the state-of-the-art method.
    3) Compute a weighted average of the above two predictions.

In this method, the weights can be either fixed or adaptive. For adaptive weight calculations, one can use a position-dependent weighting approach.

The use of the proposed method could be conditional to various factors. This way, the proposed method can be implicitly (i.e. without signaling) enabled or disabled for different blocks.

Here are some examples:

One can enable/disable the proposed method based on how strongly the reference pixels are decided to be filtered in the pre-process of prediction described with respect to Fig. 5. For example, if it was already decided that references should be strongly filtered (e.g. based on contextual information and/or CU characteristics), then one might disable the proposed method and let the process of extending MainRef from SideRef impose a filtering on the reference pixels. In other words, in this scenario, it might be even harmful to performance to avoid the double reference pixel filtering by the proposed method.

Alternatively, one can apply the proposed method only to CUs with certain characteristics. For instance, the CU size is greater than a threshold, then the proposed method can be enabled. In another example, one can apply a joint condition on the block size and angle of the selected IPM and apply the proposed method if the above combination results in a number of pixels in Category A (see the description in connection with Fig. 11) that are above a certain threshold.

In contrast to implicitly enable/disable the use of the proposed method, one can use CU level signaling to do so explicitly. To this end, a CU level flag could be signaled only for eligible CUs. An exemplary syntax for activating the presence of such a CU level flag in the CU syntax is shown herebelow wherein the syntax element controlling the presence of a CU level flag is here named as **sps_siderefpred_enabled_flag**:

|                                  | **Descriptor** |
| -------------------------------- | -------------- |
| ...                              |                |
| **sps_isp_enabled_flag**         | **u(1)**       |
| **sps_mrl_enabled_flag**         | **u(1)**       |
| **sps_mip_enabled_flag**         | **u(1)**       |
| **sps_siderefpred_enabled_flag** | **u(1)**       |
| ...                              |                |
|                                  |                |

Compared to VVC or HEVC or their successor standards, merely the sps_siderefpred_enabled_flag would represent a modification of the corresponding technical specifications (standards). This higher level flag would control the presence of a CU level flag signaled for eligible CUs. The signaling level might be a picture sequence or any other beyond CU scope such as picture level. The higher level flag may, however, generally activate or disactivate the above concept, i.e.. may switch between just using MainRef for intra prediction, or using the above embodiments for CUs for which an inherent signaling indicates the usage.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory); fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Summarizing the above, the following embodiments are derivable from above description.

A 1st embodiment provides a method for decoding a picture from a data stream, the method comprising: predicting S100 a first pixel within a coding unit, CU, of the picture from a first line 10 of reference pixels extending alongside a first side of the CU by interpolating the first line 10 of reference pixels at a first position onto which the first pixel is projected along an angular direction of an angular intra prediction mode IPM of the CU, and predicting a second pixel S102 within the CU from a second line 12 of reference pixels extending alongside a second side of the CU which is perpendicular to the first line 10 by interpolating the second line 12 of reference pixels at a second position onto which the second pixel is projected along the angular direction of the angular IPM.

A 2nd embodiment provides the method according to the 1st embodiment, wherein the angular direction points steeper onto the first line than onto the second line, and the method comprises forming the first line 10 of reference pixels by, within a portion of the first line of reference pixels which extends from a crossing pixel 14 onto which the second line 12 is projected parallel to the second side, towards the CU, filling the first line 10 of reference pixels with co-located already decoded pixels of the picture, and determining a further portion of the first line 10 of reference pixels extending from the crossing pixel 14 away from the CU by determining each reference pixel within the further portion by interpolating the second line 12 at a corresponding position on the second line 12 onto which the respective reference pixel is projected opposite to the angular direction of the angular IPM.

A 3rd embodiment provides the method according to the 2nd embodiment, further comprising forming the second line 12 of reference pixels by filling the second line 12 of reference pixels with further co-located already decoded pixels of the picture, wherein the interpolating the second line at the corresponding position on the second line 12 is performed on a smoothened version of the second line of reference pixels and/or involves a smoothing, and the interpolating the first line 10 of reference pixels at the first position is performed on a smoothened version of the first line of reference pixels or involves smoothing.

A 4th embodiment provides the method according to the 3rd embodiment, further comprising classifying S104 pixels within the CU into first-type pixels and second-type pixels, and predicting S100 the first-type pixels from the first line 10 of reference pixels by interpolating the first line of reference pixels whereto the first-type pixels are projected along an angular direction of the angular IPM of the CU, and predicting S102 the second-type pixels within the CU from the second line 12 of reference pixels by interpolating the second line of reference pixels whereto the second-type pixels are projected along the angular direction of the angular IPM, wherein the classifying is performed so that a filter kernel used for the interpolating the first line of reference pixels, placed whereto the first-type pixels are projected along the angular direction of the angular IPM of the CU, would overlap, at least partially (e.g. with at least one filter tap), a portion of the first line filled - e.g. initially with then being smoothened, or just filled - by co-located previously de/encoded pixels, and so that the second-type pixels cover a remaining portion of the CU, where no first-type pixel is. In even other words, the classification may be performed so that the filter kernel used for the interpolating the first line of reference pixels, placed whereto the second-type pixels are projected along the angular direction of the angular IPM, would remain outside the portion of the first line of reference pixels within which the first line of reference pixels is filled with co-located already decoded pixels of the picture, and so that the first-type pixels cover a remaining portion of the CU, where no second-type pixel is. Note that, the just-mentioned portion may extend from the crossing pixel with excluding or with including same. The crossing pixel is part of both SideRef and MainRef in the examples in the figures. In one example, the crossing pixel is part of the portion being filled with previously decoded pixels.

A 5<sup>th</sup> embodiment provides the method according to the 1<sup>st</sup> to 4<sup>th</sup> embodiments, further comprising classifying S106 intra-predicted CUs of the picture, which have an angular IPM associated therewith so as to be predicted from two mutually perpendicular lines of reference pixels extending along two mutually perpendicular sides of the intra-predicted CUs, into first-type CUs and second-type CUs, and predicting each first-type CU by predicting S100 at least one pixel within the respective first-type CU from one line of reference pixels among the two mutually perpendicular lines of reference pixels by interpolating the main line of reference pixels at a position of the one line onto which the at least one pixel is projected along an angular direction of the angular IPM of the respective first-type CU, and predicting S102 at least one further pixel within the CU from another line of reference pixels among the two mutually perpendicular lines of reference pixels by interpolating the other line of reference pixels at a position of the other line onto which the at least one further pixel is projected along the angular direction of the angular IPM of the respective first-type CU, and predicting each second-type CU by predicting S108 all pixels within the respective second-type CU from one line of reference pixels among the two mutually perpendicular lines of reference pixels by interpolating the one line of reference pixels at a position of the one line onto which the at least one pixel is projected along the angular direction of the angular IPM of the respective second-type CU.

A 6<sup>th</sup> embodiment provides the method according to the 5<sup>th</sup> embodiment, wherein each first-type CU is predicted by forming a main line of reference pixels among the two mutually perpendicular lines of reference pixels, onto which the angular direction points steeper, by, within a portion of the main line of reference pixels which extends from a crossing pixel onto which a side line of reference pixels among the two mutually perpendicular lines of reference pixels, other than the main line of reference pixels, is projected parallel to the side line of reference pixels, towards the respective first-type CU, filling the main line of reference pixels with co-located already decoded pixels of the picture, and determining a further portion of the main line of reference pixels extending from the crossing pixel away from the respective first-type CU by determining each reference pixel within the further portion by interpolating the side line of reference pixels at a corresponding position onto which the respective reference pixel is projected opposite to the angular direction of the angular IPM, and forming the side line of reference pixels by filling the side line of reference pixels with further co-located already decoded pixels of the picture, classifying S104 pixels within the respective first-type CU into first-type pixels and second-type pixels, and predicting the first-type pixels from the main line of reference pixels by interpolating the main line of reference pixels whereto the first-type pixels are projected along an angular direction of the angular IPM of the CU, and predicting the second-type pixels within the CU from the side line of reference pixels by interpolating the side line of reference pixels whereto the second-type pixels are projected along the angular direction of the angular IPM, wherein the interpolating the side line of reference pixels at the corresponding position is performed on a smoothened version of the side line of reference pixels and/or involves a smoothing, and the interpolating the main line of reference pixels at the first position is performed on a smoothened version of the main line of reference pixels or involves smoothing, wherein the classifying the pixels within the respective first-type CU is performed so that a filter kernel used for the interpolating the main line of reference pixels, placed whereto the first-type pixels are projected along the angular direction of the angular IPM of the CU, would overlap, at least partially (e.g. with at least one filter tap), a portion of the main line filled - e.g. initially with then being smoothened, or just filled - by co-located previously de/encoded pixels, and so that the second-type pixels cover a remaining portion of the CU, where no first-type pixel is. In even other words, the classification may be performed so that the filter kernel used for the interpolating the main line of reference pixels, placed whereto the second-type pixels are projected along the angular direction of the angular IPM, would remain outside the portion of the main line of reference pixels within which the main line of reference pixels is filled with co-located already decoded pixels of the picture, and so that the first-type pixels cover a remaining portion of the CU, where no second-type pixel is. Note that, the just-mentioned portion may extend from the crossing pixel with excluding or with including same. The crossing pixel is part of both SideRef and MainRef in the examples in the figures. In one example, the crossing pixel is part of the portion being filled with previously decoded pixels.

A 7<sup>th</sup> embodiment provides the method according to the 5<sup>th</sup> or 6<sup>th</sup> embodiment, wherein the classifying the intra-predicted CUs of the picture is performed depending on a smoothing strength determined for the intra-predicted CUs, for smoothing the two mutually perpendicular lines of reference pixels to perform the interpolation thereonto, and/or an explicit CU-level signalling in the data stream for the intra-predicted CUs, and/or a size or shape of the intra-predicted CUs, and/or the angular IPM. The smoothing strength might be determined based on coding parameter of neighboring already encoded/decoded CUs or their sizes and positions.

An 8th embodiment provides the method according to the 5th to 7th embodiments, wherein the classifying the intra-predicted CUs of the picture is performed for each intra-predicted CU so that the respective intra-predicted CU is appointed a second-type CU when a smoothing strength determined for the respective intra-predicted CU, for smoothing the two mutually perpendicular lines of reference pixels to perform the interpolation thereonto, is , stronger than a predetermined threshold, and/or so that the respective intra-predicted CU is appointed a first-type CU when an explicit CU-level signalling in the data stream for the intra-predicted CUs assumes a first state, and/or so that the respective intra-predicted CU is appointed a second-type CU when a size or shape of the intra-predicted CUs does not fulfil a predetermined condition for first-type CUs.

A 9th embodiment provides the method according to the 1st to 8th embodiments, wherein the first and second lines of reference pixels are placed so as to directly adjoin the CU or be a number of pixels apart from the CU depending on information conveyed in the data stream.

A 10th embodiment provides the method according to the 1st to 9th embodiments, wherein the predicting the second pixel within the CU comprises determining a first predictor from the second line of reference pixels by the interpolating the second line of reference pixels at the second position onto which the second pixel is projected along the angular direction of the angular IPM, and a second predictor from the first line of reference pixels by interpolating the first line of reference pixels whereto the second pixel is projected along the angular direction of the angular IPM of the CU, and forming a weighted average of the first and second predictors.

An 11th embodiment provides a method for encoding a picture into a data stream, the method comprising: predicting a first pixel within a coding unit, CU, of the picture from a first line of reference pixels extending alongside a first side of the CU by interpolating the first line of reference pixels at a first position onto which the first pixel is projected along an angular direction of an angular intra prediction mode (IPM) of the CU, and predicting a second pixel within the CU from a second line of reference pixels extending alongside a second side of the CU which is perpendicular to the second line by interpolating the second line of reference pixels at a second position onto which the second pixel is projected along the angular direction of the angular IPM.

Note that all of the 2nd to 10th embodiments may be applied onto the 11th embodiment to yield further embodiments out of the 11th embodiment, wherein all

terms mentioning "previously decoded" or the like would be "previously encoded" and so forth.

That is, a 11-2nd embodiment provides the method according to the 11th embodiment, wherein the angular direction points steeper onto the first line than onto the second line, and the method comprises forming the first line 10 of reference pixels by, within a portion of the first line of reference pixels which extends from a crossing pixel 14 onto which the second line 12 is projected parallel to the second side, towards the CU, filling the first line 10 of reference pixels with co-located already encoded pixels of the picture, and determining a further portion of the first line 10 of reference pixels extending from the crossing pixel 14 away from the CU by determining each reference pixel within the further portion by interpolating the second line 12 at a corresponding position on the second line 12 onto which the respective reference pixel is projected opposite to the angular direction of the angular IPM.

A 11-3rd embodiment provides the method according to the 11-2nd embodiment, further comprising forming the second line 12 of reference pixels by filling the second line 12 of reference pixels with further co-located already encoded pixels of the picture, wherein the interpolating the second line at the corresponding position on the second line 12 is performed on a smoothened version of the second line of reference pixels and/or involves a smoothing, and the interpolating the first line 10 of reference pixels at the first position is performed on a smoothened version of the first line of reference pixels or involves smoothing.

A 11-4th embodiment provides the method according to the 11-3rd embodiment, further comprising classifying S104 pixels within the CU into first-type pixels and second-type pixels, and predicting S100 the first-type pixels from the first line 10 of reference pixels by interpolating the first line of reference pixels whereto the first-type pixels are projected along an angular direction of the angular IPM of the CU, and predicting S102 the second-type pixels within the CU from the second line 12 of reference pixels by interpolating the second line of reference pixels whereto the second-type pixels are projected along the angular direction of the angular IPM, wherein the classifying is performed so that a filter kernel used for the interpolating the first line of reference pixels, placed whereto the first-type pixels are projected along the angular direction of the angular IPM of the CU, would overlap, at least partially (e.g. with at least one filter tap), a portion of the first line filled - e.g. initially with then being smoothened, or just filled - by co-located previously de/encoded pixels, and so that the second-type pixels cover a remaining portion of the CU, where no first-type pixel is.

A 11-5th embodiment provides the method according to the 11th to 11-4th embodiments, further comprising classifying S106 intra-predicted CUs of the picture, which have an angular IPM associated therewith so as to be predicted from two mutually perpendicular lines of reference pixels extending along two mutually perpendicular sides of the intra-predicted CUs, into first-type CUs and second-type CUs, and predicting each first-type CU by predicting S100 at least one pixel within the respective first-type CU from one line of reference pixels among the two mutually perpendicular lines of reference pixels by interpolating the main line of reference pixels at a position of the one line onto which the at least one pixel is projected along an angular direction of the angular IPM of the respective first-type CU, and predicting S102 at least one further pixel within the CU from another line of reference pixels among the two mutually perpendicular lines of reference pixels by interpolating the other line of reference pixels at a position of the other line onto which the at least one further pixel is projected along the angular direction of the angular IPM of the respective first-type CU, and predicting each second-type CU by predicting S108 all pixels within the respective second-type CU from one line of reference pixels among the two mutually perpendicular lines of reference pixels by interpolating the one line of reference pixels at a position of the one line onto which the at least one pixel is projected along the angular direction of the angular IPM of the respective second-type CU.

A 11-6th embodiment provides the method according to the 11-5th embodiment, wherein each first-type CU is predicted by forming a main line of reference pixels among the two mutually perpendicular lines of reference pixels, onto which the angular direction points steeper, by, within a portion of the main line of reference pixels which extends from a crossing pixel onto which a side line of reference pixels among the two mutually perpendicular lines of reference pixels, other than the main line of reference pixels, is projected parallel to the side line of reference pixels, towards the respective first-type CU, filling the main line of reference pixels with co-located already encoded pixels of the picture, and determining a further portion of the main line of reference pixels extending from the crossing pixel away from the respective first-type CU by determining each reference pixel within the further portion by interpolating the side line of reference pixels at a corresponding position onto which the respective reference pixel is projected opposite to the angular direction of the angular IPM, and forming the side line of reference pixels by filling the side line of reference pixels with further co-located already encoded pixels of the picture, classifying S104 pixels within the respective first-type CU into first-type pixels and second-type pixels, and predicting the first-type pixels from the main line of reference pixels by interpolating the main line of reference pixels whereto the first-type pixels are projected along an angular direction of the angular IPM of the CU, and predicting the second-type pixels within the CU from the side line of reference pixels by interpolating the side line of reference pixels whereto the second-type pixels are projected along the angular direction of the angular IPM, wherein the interpolating the side line of reference pixels at the corresponding position is performed on a smoothened version of the side line of reference pixels and/or involves a smoothing, and the interpolating the main line of reference pixels at the first position is performed on a smoothened version of the main line of reference pixels or involves smoothing, wherein the classifying the pixels within the respective first-type CU is performed so that a filter kernel used for the interpolating the main line of reference pixels, placed whereto the first-type pixels are projected along the angular direction of the angular IPM of the CU, would overlap, at least partially (e.g. with at least one filter tap), a portion of the main line filled - e.g. initially with then being smoothened, or just filled - by co-located previously de/encoded pixels, and so that the second-type pixels cover a remaining portion of the CU, where no first-type pixel is. In even other words, the classification may be performed so that the filter kernel used for the interpolating the main line of reference pixels, placed whereto the second-type pixels are projected along the angular direction of the angular IPM, would remain outside the portion of the main line of reference pixels within which the main line of reference pixels is filled with co-located already encoded pixels of the picture, and so that the first-type pixels cover a remaining portion of the CU, where no second-type pixel is. Note that, the just-mentioned portion may extend from the crossing pixel with excluding or with including same. The crossing pixel is part of both SideRef and MainRef in the examples in the figures. In one example, the crossing pixel is part of the portion being filled with a previously encoded pixels.

A 11-7th embodiment provides the method according to the 11-5th or 11-6th embodiment, wherein the classifying the intra-predicted CUs of the picture is performed depending on a smoothing strength determined for the intra-predicted CUs, for smoothing the two mutually perpendicular lines of reference pixels to perform the interpolation thereonto, and/or an explicit CU-level signalling in the data stream for the intra-predicted CUs, and/or a size or shape of the intra-predicted CUs, and/or the angular IPM. The smoothing strength might be determined based on coding parameter of neighboring already encoded/decoded CUs or their sizes and positions.

An 11-8th embodiment provides the method according to the 11-5th to 11-7th embodiments, wherein the classifying the intra-predicted CUs of the picture is performed for each intra-predicted CU so that the respective intra-predicted CU is appointed a second-type CU when a smoothing strength determined for the respective intra-predicted CU, for smoothing the two mutually perpendicular lines of reference pixels to perform the interpolation thereonto, is stronger than a predetermined threshold, and/or so that the respective intra-predicted CU is appointed a first-type CU when an explicit CU-level signalling in the data stream for the intra-predicted CUs assumes a first state, and/or so that the respective intra-predicted CU is appointed a second-type CU when a size or shape of the intra-predicted CUs does not fulfil a predetermined condition for first-type CUs.

A 11-9th embodiment provides the method according to the 11th to 11-8th embodiments, wherein the first and second lines of reference pixels are placed so as to directly adjoin the CU or be a number of pixels apart from the CU depending on information conveyed in the data stream.

A 11-10th embodiment provides the method according to the 11th to 11-9th embodiments, wherein the predicting the second pixel within the CU comprises determining a first predictor from the second line of reference pixels by the interpolating the second line of reference pixels at the second position onto which the second pixel is projected along the angular direction of the angular IPM, and a second predictor from the first line of reference pixels by interpolating the first line of reference pixels whereto the second pixel is projected along the angular direction of the angular IPM of the CU, and forming a weighted average of the first and second predictors.

A 12th embodiment provides an apparatus for decoding a picture from a data stream, wherein the apparatus is configured to: predict a first pixel within a coding unit, CU, of the picture from a first line of reference pixels extending alongside a first side of the CU by interpolating the first line of reference pixels at a first position onto which the first pixel is projected along an angular direction of an angular intra prediction mode (IPM) of the CU, and predict a second pixel within the CU from a second line of reference pixels extending alongside a second side of the CU which is perpendicular to the second line by interpolating the second line of reference pixels at a second position onto which the second pixel is projected along the angular direction of the angular IPM.

A 13th embodiment provides an apparatus for encoding a picture into a data stream, wherein the apparatus is configured to: predict a first pixel within a coding unit, CU, of the picture from a first line of reference pixels extending alongside a first side of the CU by interpolating the first line of reference pixels at a first position onto which the first pixel is projected along an angular direction of an angular intra prediction mode (IPM) of the CU, and predict a second pixel within the CU from a second line of reference pixels extending alongside a second side of the CU which is perpendicular to the second line by interpolating the second line of reference pixels at a second position onto which the second pixel is projected along the angular direction of the angular IPM.

A 14th embodiment provides a data stream having encoded thereinto a picture, wherein the data stream is encoded using a method according to the 11th embodiment.

A 15th embodiment provides a non-transitory digital storage medium having a computer program stored thereon to perform the method according to the 1st or 11th embodiment when said computer program is run by a computer.

**List of Abbreviations**

AVC ISO/IEC 14496-10 Advanced Video Coding (AVC) / ITU-T Rec. H.264 [1]

EVC ISO/IEC 23094-1 Essential video coding (EVC)

HEVC ISO/IEC 23008-2 High Efficiency Video Coding (HEVC) / ITU-T Rec. H.265 [2]

VVC ISO/IEC 23090-3 Versatile Video Coding (VVC) / ITU-T Rec. H.266 [3]

AV1 AOMedia Video 1 (AV1)

**References**

[1] H.264: Advanced video coding for generic audiovisual services, https://www.itu.int/rec/T-REC-H.264-202108-P/en

[2] H.265: High efficiency video coding, https://www.itu.int/rec/T-REC-H.265-202108-P/en

[3] H.266: Versatile video coding, https://www.itu.int/rec/T-REC-H.266-202008-I/en

[4] AV1 Bitstream & Decoding Process Specification, http://aomedia.org/av1/specification/

[5] Algorithm description of Enhanced Compression Model 13 (ECM 13), document JVET-AH2025, https://jvet-experts.org/doc_end_user/documents/33_Teleconference/wg11/JVET-AG2025-v1.zip

**Claims**

1. A method for decoding a picture from a data stream, the method comprising:

   predicting (S100) a first pixel within a coding unit, CU, of the picture from a first line (10) of reference pixels extending alongside a first side of the CU by interpolating the first line (10) of reference pixels at a first position onto which the first pixel is projected along an angular direction of an angular intra prediction mode (IPM) of the CU, and
   predicting a second pixel (S102) within the CU from a second line (12) of reference pixels extending alongside a second side of the CU which is perpendicular to the first line (10) by interpolating the second line (12) of reference pixels at a second position onto which the second pixel is projected along the angular direction of the angular IPM.

2. The method according to claim 1, wherein the angular direction points steeper onto the first line than onto the second line, and the method comprises

forming the first line (10) of reference pixels by, within a portion of the first line of reference pixels which extends from a crossing pixel (14) onto which the second line (12) is projected parallel to the second side, towards the CU,'filling the first line (10) of reference pixels with co-located already decoded pixels of the picture, and determining a further portion of the first line (10) of reference pixels extending from the crossing pixel (14) away from the CU by determining each reference pixel within the further portion by interpolating the second line (12) at a corresponding position on the second line (12) onto which the respective reference pixel is projected opposite to the angular direction of the angular IPM.

3. The method according to claim 2, further comprising forming the second line (12) of reference pixels by filling the second line (12) of reference pixels with further co-located already decoded pixels of the picture.

4. The method according to claim 3, further comprising

classifying (S104) pixels within the CU into first-type pixels and second-type pixels, and predicting (S100) the first-type pixels from the first line (10) of reference pixels by interpolating the first line of reference pixels whereto the first-type pixels are projected along an angular direction of the angular IPM of the CU, and predicting (S102) the second-type pixels within the CU from the second line (12) of reference pixels by interpolating the second line of reference pixels whereto the second-type pixels are projected along the angular direction of the angular IPM, wherein the classifying is performed so that

a filter kernel used for the interpolating the first line of reference pixels, placed whereto the first-type pixels are projected along the angular direction of the angular IPM of the CU, would overlap at least with one filter tap the portion of the first line of reference pixels within which the first line (10) of reference pixels is filled with co-located already decoded pixels of the picture, and the second-type pixels cover a remaining portion of the CU, where no first-type pixel is.

5. The method according to any of claims 1 to 4, further comprising

classifying (S106) intra-predicted CUs of the picture, which have an angular IPM associated therewith so as to be predicted from two mutually perpendicular lines of reference pixels extending along two mutually perpendicular sides of the intra-predicted CUs, into first-type CUs and second-type CUs, and predicting each first-type CU by

predicting (S100) at least one pixel within the respective first-type CU from one line of reference pixels among the two mutually perpendicular lines of reference pixels by interpolating the main line of reference pixels at a position of the one line onto which the at least one pixel is projected along an angular direction of the angular IPM of the respective first-type CU, and predicting (S102) at least one further pixel within the CU from another line of reference pixels among the two mutually perpendicular lines of reference pixels by interpolating the other line of reference pixels at a position of the other line onto which the at least one further pixel is projected along the angular direction of the angular IPM of the respective first-type CU, and

predicting each second-type CU by predicting (S108) all pixels within the respective second-type CU from one line of reference pixels among the two mutually perpendicular lines of reference pixels by interpolating the one line of reference pixels at a position of the one line onto which the at least one pixel is projected along the angular direction of the angular IPM of the respective second-type CU.

6. The method according to claim 5, wherein each first-type CU is predicted by

forming a main line of reference pixels among the two mutually perpendicular lines of reference pixels, onto which the angular direction points steeper, by, within a portion of the main line of reference pixels which extends from a crossing pixel onto which a side line of reference pixels among the two mutually perpendicular lines of reference pixels, other than the main line of reference pixels, is projected parallel to the side line of reference pixels, towards the respective first-type CU, filling the main line of reference pixels with co-located already decoded pixels of the picture, and determining a further portion of the main line of reference pixels extending from the crossing pixel away from the respective first-type CU by determining each reference pixel within the further portion by interpolating the side line of reference pixels at a corresponding position onto which the respective reference pixel is projected opposite to the angular direction of the angular IPM, and

forming the side line of reference pixels by filling the side line of reference pixels with further co-located already decoded pixels of the picture, classifying (S104) pixels within the respective first-type CU into first-type pixels and second-type pixels, and

predicting the first-type pixels from the main line of reference pixels by interpolating the main line of reference pixels whereto the first-type pixels are projected along an angular direction of the angular IPM of the CU, and

predicting the second-type pixels within the CU from the side line of reference pixels by interpolating the side line of reference pixels whereto the second-type pixels are projected along the angular direction of the angular IPM,

wherein the classifying the pixels within the respective first-type CU is performed

so that a filter kernel used for the interpolating the main line of reference pixels, placed whereto the first-type pixels are projected along the angular direction of the angular IPM of the CU, would overlap with at least one filter tap the portion of the first line of reference pixels within which the main line (10) of reference pixels is filled with co-located already decoded pixels of the picture, and

so that the second -type pixels cover a remaining portion of the respective-first CU, where no first-type pixel is,

wherein the classifying the intra-predicted CUs of the picture is performed

so that the second-type CUs would have no, or fewer than a maximum pixel number, second-type pixels.

7.  The method according to claim 5 or 6, wherein the classifying the intra-predicted CUs of the picture is performed depending on

a smoothing strength determined for the intra-predicted CUs, for smoothing the two mutually perpendicular lines of reference pixels to perform the interpolation thereonto, and/or

an explicit CU-level signalling in the data stream for the intra-predicted CUs, and/or

a size or shape of the intra-predicted CUs, and/or

the angular IPM.

8.  The method according to any of claims 5 to 7, wherein the classifying the intra-predicted CUs of the picture is performed for each intra-predicted CU

so that the respective intra-predicted CU is appointed a second-type CU when a smoothing strength determined for the respective intra-predicted CU, for smoothing the two mutually perpendicular lines of reference pixels to perform the interpolation thereonto, is stronger than a predetermined threshold, and/or

so that the respective intra-predicted CU is appointed a first-type CU when an explicit CU-level signalling in the data stream for the intra-predicted CUs assumes a first state, and/or

so that the respective intra-predicted CU is appointed a second-type CU when a size or shape of the intra-predicted CUs does not fulfil a predetermined condition for first-type CUs.

9.  The method according to any of claims 1 to 8, wherein the first and second lines of reference pixels are placed so as to directly adjoin the CU or be a number of pixels apart from the CU depending on information conveyed in the data stream.

10.  The method according to any of claims 1 to 9, wherein

the predicting the second pixel within the CU comprises determining a first predictor from the second line of reference pixels by the interpolating the second line of reference pixels at the second position onto which the second pixel is projected along the angular direction of the angular IPM, and a second predictor from the first line of reference pixels by interpolating the first line of reference pixels whereto the second pixel is projected along the angular direction of the angular IPM of the CU, and forming a weighted average of the first and second predictors.

11.  A method for encoding a picture into a data stream, the method comprising:

predicting a first pixel within a coding unit, CU, of the picture from a first line of reference pixels extending alongside a first side of the CU by interpolating the first line of reference pixels at a first position onto which the first pixel is projected along an angular direction of an angular intra prediction mode (IPM) of the CU, and

predicting a second pixel within the CU from a second line of reference pixels extending alongside a second side of the CU which is perpendicular to the second line by interpolating the second line of reference pixels at a second position onto which the second pixel is projected along the angular direction of the angular IPM.

12.  An apparatus for decoding a picture from a data stream, wherein the apparatus is configured to:

predict a first pixel within a coding unit, CU, of the picture from a first line of reference pixels extending alongside a first side of the CU by interpolating the first line of reference pixels at a first position onto which the first pixel is projected along an angular direction of an angular intra prediction mode (IPM) of the CU, and

predict a second pixel within the CU from a second line of reference pixels extending alongside a second side of the CU which is perpendicular to the second line by interpolating the second line of reference pixels at a second position onto which the second pixel is projected along the angular direction of the angular IPM.

13. An apparatus for encoding a picture into a data stream, wherein the apparatus is configured to:

predict a first pixel within a coding unit, CU, of the picture from a first line of reference pixels extending alongside a first side of the CU by interpolating the first line of reference pixels at a first position onto which the first pixel is projected along an angular direction of an angular intra prediction mode (IPM) of the CU, and

predict a second pixel within the CU from a second line of reference pixels extending alongside a second side of the CU which is perpendicular to the second line by interpolating the second line of reference pixels at a second position onto which the second pixel is projected along the angular direction of the angular IPM.

14. A data stream having encoded thereinto a picture, wherein the data stream is encoded using a method according to claim 11.

15. A non-transitory digital storage medium having a computer program stored thereon to perform the method according to claim 1 or 11 when said computer program is run by a computer.

Fig. 1

EP 4 730 777 A1

2/31

Bit-stream 152

Entropy decoder 156

Partitioning 158

172

Inverse Quantization 160

Inverse Transform 162

174

164

178

Post-decoding processing 168

In-loop Filters 166

154

176

Intra Prediction

Decoded picture buffer 180

184

Motion Compensation 182

108

150

170

Fig. 2

Figure 3

Figure 4

Above reference line

Current CU

Left reference line

Figure 5

e.g. $\omega_1 = 0.25$, $\omega_2 = 0.5$, $\omega_3 = 0.25$

Figure 6

# Figure 7

Figure 8

Extended
MainRef

Extension of
MainRef

Initial
MainRef

Current CU

EP 4 730 777 A1

Figure 9

Initial
MainRef

Extension
of MainRef

Current CU

4-tap interpolation filter

$\omega_1$ × $\omega_2$ × $\omega_3$ × $\omega_4$ ×

Figure 10

Extended
MainRef

4-tap interpolation filter

$\omega_1$ $\omega_2$ $\omega_3$ $\omega_4$

× × × ×

Current CU

Figure 11

Figure 12

```
                           ╭─────────────╮
                           │    Start    │
                           ╰──────┬──────╯
                                  │
                                  ▼
          ┌──────────────────────────────────────────────┐
          │  Compute the *main angle* from current IPM     │
          └──────────────────────┬───────────────────────┘
                                  │
                                  ▼
          ┌──────────────────────────────────────────────┐
          │ Identify all pixels of Category A within the   │
          │ current CU                                     │
          └──────────────────────┬───────────────────────┘
                                  │
                                  ▼
          ┌──────────────────────────────────────────────┐
          │ Determine eligibility of the combination of    │
          │ current CU and current IPM characteristics,    │
          │ if it leads into at least one Category A pixel  │
          │ within current CU                              │
          └──────────────────────┬───────────────────────┘
                                  │
                                  ▼
                 No          ◇ Eligible? ◇
          ◄───────────────────────┤
                                  │ Yes
                                  ▼
          ┌──────────────────────────────────────────────┐
          │ Compute the *inverse angle* from the           │
          │ *main angle*                                   │
          └──────────────────────┬───────────────────────┘
                                  │
                                  ▼
          ┌──────────────────────────────────────────────┐
          │ For each pixel of Category A, apply angular     │
          │ prediction based on the *inverse angle* on the │
          │ *SideRef*                                      │
          └──────────────────────┬───────────────────────┘
                                  │
                                  ▼
          ┌──────────────────────────────────────────────┐
          │ For pixels of Category B and C, apply angular  │
          │ prediction Based on the *main angle* on the    │
          │ extended *MainRef*                             │
          │ (as in state-of-the-art)                       │
          └──────────────────────┬───────────────────────┘
                                  │
                                  ▼
                           ╭─────────────╮
                           │     End     │
                           ╰─────────────╯
```

EP 4 730 777 A1

Figure 13

Extended
MainRef

IPM44

$\theta$

$\theta$

SideRef

$\theta^{-1}$

Eligible

Non-eligible

EP 4 730 777 A1

Figure 14

Extended
MainRef
(refIdx 3)

SideRef
(refIdx 3)

IPM44

$\theta^{-1}$  $\theta$

$\theta$

Eligible        Non-eligible

14   10

12

IPM44

Classifying CUs — S106

Classifying pixels — S104

S108

predicting from main line of reference pixels

predicting from main line of reference pixels — S10(

predicting from side line of reference pixels — S102

Figure 15

Europäisches
Patentamt

European
Patent Office

Office européen
des brevets

# EUROPEAN SEARCH REPORT

**Application Number**

EP 24 31 5474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/191167 A1 (DRUGEON VIRGINIE [DE] ET AL) 20 June 2019 (2019-06-20) | 1-3,9-15 | INV. H04N19/11 |
| A | * paragraph [0001] - paragraph [0338] * * figures 1-28 * | 4-8 | H04N19/176 H04N19/46 H04N19/593 |
| A | MATSUO S ET AL: "Modification of angular intra prediction", 98. MPEG MEETING; 28-11-2011 - 2-12-2011; GENEVA; (MOTION PICTURE EXPERT GROUP OR ISO/IEC JTC1/SC29/WG11),, no. m21912, 25 November 2011 (2011-11-25), XP030050475, * page 1 - page 5 * | 1-15 | H04N19/117 |
| A | MATSUO S ET AL: "Modification of angular intra prediction", 7. JCT-VC MEETING; 20111121 - 20111130; GENEVA; (JOINT COLLABORATIVE TEAM ON VIDEO CODING OF ISO/IEC JTC1/SC29/WG11 AND ITU-T SG.16 ), , no. JCTVC-G350 25 November 2011 (2011-11-25), XP030231015, Retrieved from the Internet: URL:http://phenix.int-evry.fr/jct/doc_end_user/documents/7_Geneva/wg11/JCTVC-G350-v4.zip JCTVC-G350_r1.doc [retrieved on 2011-11-25] * page 1 - page 5 * | 1-15 | |

**TECHNICAL FIELDS SEARCHED (IPC)**

H04N

The present search report has been drawn up for all claims

| Place of search | Date of completion of the search | Examiner |
|---|---|---|
| Munich | 24 March 2025 | Ernst, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5474

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2025

| Patent document cited in search report | Publication date | Patent family member(s) | Publication date |
|---|---|---|---|
| US 2019191167 A1 | 20-06-2019 | NONE | |

EPO FORM P0459

## REFERENCES CITED IN THE DESCRIPTION

**Non-patent literature cited in the description**

- *H.264: Advanced video coding for generic audiovisual services*, https://www.itu.int/rec/T-REC-H.264-202108-P/en
- *H.265: High efficiency video coding*, https://www.itu.int/rec/T-REC-H.265-202108-P/en
- *H.266: Versatile video coding*, https://www.itu.int/rec/T-REC-H.266-202008-I/en
- *AV1 Bitstream & Decoding Process Specification*, http://aomedia.org/av1/specification/
- Algorithm description of Enhanced Compression Model 13 (ECM 13). *JVET-AH2025*, https://jvet-experts.org/doc_end_user/documents/33_Teleconference/wg11/JVET-AG2025-v1.zip